# EUROPÄISCHE PATENTSCHRIFT

(11) **EP 1 250 254 B1**
(45) Veröffentlichungstag und Bekanntmachung des Hinweises auf die Patenterteilung: **07.07.2004**
(21) Anmeldenummer: 01905651.4
(22) Anmeldetag: 05.01.2001
(51) Int. Cl.: B62D 25/20, B60K 13/06

(54) **BODENGRUPPE EINES KRAFTFAHRZEUGS**
MOTOR VEHICLE UNDERCARRIAGE UNIT
TRAIN DE ROULEMENT D'UN VEHICULE

(30) Priorität: 14.01.2000 DE 10001224
(43) Veröffentlichungstag der Anmeldung: 23.10.2002
(73) Patentinhaber: J. Eberspächer GmbH & Co., 73730 Esslingen (DE)
(72) Erfinder: HARRER, Peter, 66482 Zweibrücken (DE)
(74) Vertreter: Thallinger, Wolfgang
(86) Internationale Anmeldenummer: PCT/EP2001/000086
(87) Internationale Veröffentlichungsnummer: WO 2001/051336

(56) Entgegenhaltungen:
- DE-A- 3 525 036
- DE-A- 4 316 959
- DE-A- 19 926 136

## Beschreibung

Die Erfindung betrifft eine Kraftfahrzeug-Bodengruppe mit einem Unterboden und einer Abgasanlage.

Nach dem Stand der Technik ist die Abgasanlage in einem Fahrzeug unter dem Fahrzeugboden montiert und an geeigneter Stelle in einem Abstand vom Fahrzeugboden mittels Halter, Schellen und elastischer Verbindungsglieder befestigt. Von Nachteil sind die großenteils strömungsungünstige Anordnung der Abgasanlage, die bauteilaufwendige Aufmachung sowie die aufwendige Befestigungsvorrichtung. Eine gattungsgemässe Kraftfahrzeug-Bodengruppe ist aus DE-A-4 316 959 bekannt.

Es ist Aufgabe der Erfindung, eine Kraftfahrzeug-Bodengruppe der eingangs genannten Art dahingehend weiterzubilden, daß mit einfachen Mitteln ein verbessertes System einer Kraftfahrzeug-Bodengruppe mit Unterboden und Abgasanlage eingerichtet wird.

Gelöst wird die der Erfindung zugrundeliegende Aufgabe durch die Merkmale des unabhängigen Anspruchs 1.

Vorteilhaft weitergebildet wird der Erfindungsgegenstand durch die Merkmale der abhängigen Ansprüche 2 bis 12.

Grundsätzliches Wesen der Erfindung ist, daß die Abgasanlage nebst Anschlußrohren zumindest teilweise integrierter Bestandteil des Unterbodens des Kraftfahrzeugs ist.

Der Unterboden weist zumindest eine Einbuchtung auf, deren Oberflächenbegrenzung der Oberkontur zumindest eines Teils der Abgasanlage entspricht.

Die Unterkontur zumindest eines Teils der Abgasanlage ist in besonders vorteilhafter Weise eine im wesentlichen plane Verschlußplatte.

Ist die Abgasanlage in Halbschalentechnik ausgeführt, so kann zweckmäßigerweise die Einbuchtung des Unterbodens zumindest Teil des oberen Halbschalengehäuses der Abgasanlage nebst Anschlußrohren sein und das untere Halbschalengehäuse nebst unteren Anschlußrohrteilen an der Unterseite des Unterbodens befestigt sein.

Insbesondere ist der Unterboden ein Preßformteil mit der Oberkontur zumindest eines Teils der Abgasanlage.

Besondere Vorteile ergeben sich, wenn zumindest zwei Varianten einer Oberkontur einer Abgasanlage im Unterboden des Kraftfahrzeugs ausgebildet sind. Ein derartiges Unterbodensystem eignet sich dann entweder für einen kompletten Ausbau einer einzigen aufwendigen hochwertigen Abgasanlage beispielsweise für einen besonders leistungsstarken Kraftfahrzeug-Verbrennungsmotor, oder für einen teilweisen Ausbau einer weniger aufwendigen Abgasanlage für einen weniger leistungsstarken Kraftfahrzeugmotor bei gleicher Unterbodenstruktur, welche dann in größerer Serie kostenreduzierend gefertigt werden kann und als gleicher Bauteil-Modul für unterschiedliche Fahrzeugvarianten dienen kann.

Es können bevorzugt auch zwei vorzugsweise gleiche seitenverkehrte Varianten einer Oberkontur einer Abgasanlage im Unterboden des Kraftfahrzeugs ausgebildet sein. Eine derartige Ausbildung schafft dann ein einziges Bauteil eines Unterbodens, in welchen die Abgasanlage wahlweise rechts oder links einbaubar ist, um anderen Kriterien oder Bestimmungen Rechnung zu tragen, z.B. Rechts- oder Linksverkehr eines Landes.

Besonders zweckmäßig ist es, wenn bei mehreren im Unterboden ausgebildeten Varianten nur eine Variante der Abgasanlage in einem Kraftfahrzeug eingebaut ist und die Oberkontur der anderen nicht eingebauten Variante(n) der Abgasanlage die Oberseite eines Einbauraums für andere Kraftfahrzeug-Teile oder - Systeme, wie z.B. Kabelbaum, Fahrzeug-Elektronik, Fahrzeugtank, Fahrzeug-Innenraumheizung oder eine integrierte Fahrzeug-Bodenheizung, bildet, wobei letztere Bodenheizung die Kanalausbildung des Unterbodens nutzt, um Heizleitungskanäle einzurichten.

Bevorzugt ist die Abgasanlage nach neuerer Technik eine Schalldämpfer-/Katalysator-Abgasanlage.

Innenteile der Abgasanlage wie Innenrohre, Innenkammern, Basaltwolle, Katalysatormonolith können zweckmäßigerweise zumindest teilweise in einer Folie oder in einem Pappkarton verpackt, insbesondere eingeschweißt sein, wobei das verpackte bzw. verschweißte Paket in der Einbuchtung des Unterbodens zumindest teilweise aufgenommen ist.

Die Innenteile der Abgasanlage wie Innenrohre, Innenkammern, Basaltwolle, Katalysatormonolith sind insbesondere vorgefertigt und als Baueinheit zusammengesetzt, bevor die Baueinheit im Unterboden mit einfachen Mitteln endmoniert wird.

Ein gegebenenfalls freier Außenraum des verpackten bzw. verschweißten Pakets in der Einbuchtung des Unterbodens kann mit Füllmaterial, insbesondere mit Glas- oder Basaltwolle oder einem anderen Dämpfungsmaterial, packdicht aufgefüllt sein.

Der Unterboden ist bevorzugt ein formgepreßtes Unterbodenblech, und die untere Verschlußplatte bzw. das untere Halbschalen-Gehäuseteil oder -Rohrteil ist zweckmäßigerweise ein formgepreßtes Blechteil, welche(s) an das Unterbodenblech lasergeschweißt, genietet oder getoxt ist.

Durch die Erfindung wird ein völlig neues, vielseitig verwendbares System eines Unterbodens mit einfach Mitteln geschaffen. Die Katalysator-/Schalldämpfer-Anlage ist in den Unterboden des Kraftfahrzeuges integriert, wobei eigene Rohre, Schalen und Mäntel der Anlage ganz oder teilweise entfallen. Die erfindungsgemäße Unterbodengruppe übernimmt die Aufgaben der Schalen, Mäntel und aller Rohre einer üblichen Anlage. Dadurch ergibt sich eine sehr kostengünstige Abgasanlage und auch der Vorteil der Gewichtseinsparung. Ferner ist die Aerodynamik des Kraftfahrzeuges verbessert, da die Abgasanlage nach unten überhaupt nicht oder nicht nennenswert vorsteht. Dies ergibt ferner Vorteile im Energieverbrauch und in der Höchstgeschwindigkeit eines Fahrzeuges, insbesondere auch bei Rennfahrzeugen. Da vorstehende Teile der Abgasanlage nach unten nicht oder nur in geringem Maße vorhanden sind, ist auch die Gefahr der Beschädigung der Abgasanlage minimiert. Die erfindungsgemäße Abgasanlage ist auch weniger verschleiß- und korrosionsempfindlich, da die Teile nicht nenneswert der gegebenenfalls kalten und feuchten Atmosphäre ausgesetzt sind. Dies erhöht die Lebensdauer der Auspuffanlage. Die Einbuchtungen im Unterboden sorgen für eine Versteifung der Karosserie. Bekannte Versteifungen in der Unterbodengruppe können entfallen. Dadurch kann weiter Material eingespart und weiter Gewicht reduziert werden.

Wie bereits erwähnt, eröffnen sich durch die Erfindung kostengünstige völlig neue Konstruktionsvarianten eines Fahrzeuges, wenn nämlich bei einem großen Varianten-Netz an unterbodenseitigen Einbuchtungen in nicht für die Abgasanlage genutzte Einbuchtungen andere Fahrzeugteile oder Fahrzeugsysteme integriert werden, wie zum Beispiel eine Fußboden-Standheizung. Auch strahlt die erfindungsgemäße Abgasanlage im Betrieb Wärme ins Fahrzeuginnere ab, die zur Beheizung des Innenbodens bzw. des Fahrzeug-Innenraums genutzt werden kann. Die erfindungsgemäße Abgasanlage ist auch nicht so großen Temperaturdifferenzen wie eine bekannte Abgasanlage ausgesetzt, die mit der kalten Umgebung komplett in Verbindung steht. Dadurch kann die bisher kostenintensive Abgasanlage grundsätzlich einfacher und mithin billiger konzipiert werden.

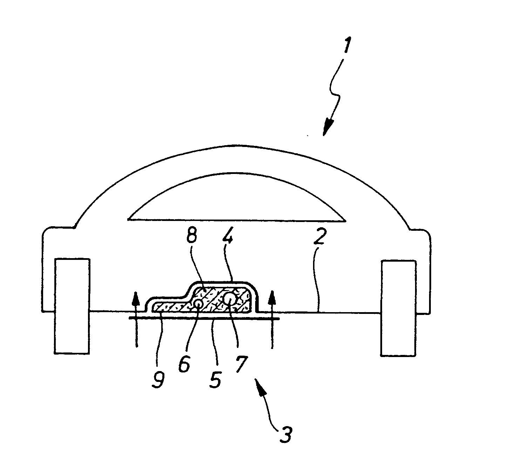

Die Erfindung wird nachfolgend anhand eines Ausführungsbeispiels unter Bezugnahme auf die aus einer einzigen Figur bestehende Zeichnung näher erläutert.

Die Zeichnung zeigt ein Kraftfahrzeug mit der Erfindung schematisch in einem Schnitt.

Gemäß Zeichnung umfaßt ein Kraftfahrzeug 1 eine Unterbodengruppe mit einem Unterboden 2 und einer Abgasanlage 3.

Die Kraftfahrzeug-Bodengruppe mit Unterboden 2 und Abgasanlage 3 kennzeichnet sich dadurch, daß die Abgasanlage nebst Anschlußrohren integrierter Bestandteil des Unterbodens 2 des Kraftfahrzeugs 1 ist.

Der Unterboden 2 weist Einbuchtungen auf, deren Oberflächenbegrenzung die Oberkontur 4 der Abgasanlage 3 ist. Es übernimmt die Unterbodengruppe die Aufgaben der Schalen, Mäntel und aller Rohre einer üblichen Anlage.

Am Unterboden 2 des Kraftfahrzeugs 1 ist eine gerade bzw. plane Verschlußplatte 5 lasergeschweißt, genietet oder getoxt. Unterboden und plane Verschlußplatte sind Blechformteile.

Die Abgasanlage 3 ist eine Schalldämpfer-/Katalysator-Abgasanlage und in Sandwich-Bauweise aufgebaut.

Die vorgefertigten und zuvor zusammengesetzten zentralen Innenteile der Abgasanlage 3, wie Innenrohre 6, Innenkammern 7, Basaltwolle 8 und Katalysatormonolith sind in einer Folie 9 eingeschweißt. Das verschweißte Paket ist in einer (erweiteren) Einbuchtung der Vielzahl der Einbuchtungen des Unterbodens 2 aufgenommen. Die restlichen (schlanken) Einbuchtungen bestimmen die Oberseite der Rohrführung praktisch vom Verbrennungsmotor zum zentralen Teil der Abgasanlage (Kat-Nachschalldämpfer) und von dort zur Atmosphäre.

Freier Außenraum des verpackten bzw. verschweißten Pakets in der Einbuchtung des Unterbodens 2 ist mit Füllmaterial, insbesondere mit Basaltwolle, packdicht aufgefüllt.

## Patentansprüche

1. Kraftfahrzeug-Bodengruppe (1) mit Unterboden (2) und Abgasanlage (3), wobei der Unterboden (2) zumindest eine Einbuchtung aufweist, deren Oberflächenbegrenzung der Oberkontur (4) zumindest eines Teils der Abgasanlage (3) entspricht,
**dadurch gekennzeichnet,**
**dass** der Unterboden (2) zumindest bereichsweise ein Teil der Abgasanlage (3) ist.

2. Kraftfahrzeug-Bodengruppe nach Anspruch 1,
**dadurch gekennzeichnet,**
**daß** die Abgasanlage (3) in Halbschalentechnik ausgeführt ist, wobei die Oberflächenbegrenzung der Einbuchtung des Unterbodens (2) zumindest Teil des oberen Halbschalengehäuses der Abgasanlage nebst Anschlußrohren ist und das untere Halbschalengehäuse nebst unteren Anschlußrohrteilen an der Unterseite des Unterbodens (2) befestigt ist.

3. Kraftfahrzeug-Bodengruppe nach Anspruch 1 oder 2,
**dadurch gekennzeichnet,**
**daß** die Unterkontur zumindest eines Teils der Abgasanlage (3) eine im wesentlichen plane Verschlußplatte (5) ist.

4. Kraftfahrzeug-Bodengruppe nach einem der Ansprüche 1 bis 3,
**dadurch gekennzeichnet,**
**daß** der Unterboden (2) ein Preßformteil mit der Oberkontur (4) zumindest eines Teils der Abgasanlage (3) ist.

5. Kraftfahrzeug-Bodengruppe nach einem der Ansprüche 1 bis 4,
**dadurch gekennzeichnet,**
**daß** zumindest zwei Varianten einer Oberkontur (4) einer Abgasanlage (3) im Unterboden (2) des Kraftfahrzeugs (1) ausgebildet sind.

6. Kraftfahrzeug-Bodengruppe nach Anspruch 5,
**dadurch gekennzeichnet,**
**daß** zwei vorzugsweise gleiche seitenverkehrte Varianten einer Oberkontur (4) einer Abgasanlage (3) im Unterboden (2) des Kraftfahrzeugs (1) ausgebildet sind.

7. Kraftfahrzeug-Bodengruppe nach Anspruch 5 oder 6,
**dadurch gekennzeichnet,**
**daß** nur eine Variante der Abgasanlage (3) in einem Kraftfahrzeug (1) eingebaut und die Oberkontur (4) der anderen nicht eingebauten Variante(n) der Abgasanlage die Oberseite eines Einbauraums für andere Kraftfahrzeug-Teile oder -Systeme, wie z.B. Kabelbaum, Fahrzeug-Elektronik, Fahrzeugtank, Fahrzeug-Innenraumheizung, integrierte Fahrzeug-Bodenheizung, bildet.

8. Kraftfahrzeug-Bodengruppe nach einem der Ansprüche 1 bis 7,
**dadurch gekennzeichnet,**
**daß** die Abgasanlage (3) eine Schalldämpfer-/Katalysator-Abgasanlage ist.

9. Kraftfahrzeug-Bodengruppe nach einem der Ansprüche 1 bis 8,
**dadurch gekennzeichnet,**
**daß** Innenteile der Abgasanlage (3) wie Innenrohre (6), Innenkammern (7), Basaltwolle (8), Katalysatormonolith zumindest teilweise in einer Folie (9) oder in einem Pappkarton verpackt, insbesondere eingeschweißt sind, und das verpackte bzw. verschweißte Paket in der Einbuchtung des Unterbodens (2) zumindest teilweise aufgenommen ist.

10. Kraftfahrzeug-Bodengruppe nach einem der Ansprüche 1 bis 9,
**dadurch gekennzeichnet,**
**daß** Innenteile der Abgasanlage (3) wie Innenrohre (6), Innenkammern (7), Basaltwolle (8), Katalysatormonolith vorgefertigt und als Baueinheit zusammengesetzt ist.

11. Kraftfahrzeug-Bodengruppe nach Anspruch 9 oder 10,
**dadurch gekennzeichnet,**
**daß** freier Außenraum des verpackten bzw. verschweißten Pakets in der Einbuchtung des Unterbodens (2) mit Füllmaterial, insbesondere mit Basaltwolle, packdicht aufgefüllt ist.

12. Kraftfahrzeug-Bodengruppe nach einem der Ansprüche 1 bis 11,
**dadurch gekennzeichnet,**
**daß** der Unterboden (2) ein formgepreßtes Unterbodenblech und die untere Verschlußplatte (5) bzw. das untere Halbschalen-Gehäuseteil oder -Rohrteil ein formgepreßtes Blechteil ist, welche(s) an das Unterbodenblech lasergeschweißt, genietet oder getoxt ist.

## Claims

1. Motor-vehicle floor assembly (1) having an underbody (2) and exhaust system (3), the underbody (2) having at least one indentation, the surface boundary of which corresponds to the upper contour (4) of at least part of the exhaust system (3), **characterized in that** the underbody (2) is, at least in some regions, part of the exhaust system (3).

2. Motor-vehicle floor assembly according to Claim 1, **characterized in that** the exhaust system (3) is designed using a half-shell technique, the surface boundary of the indentation of the underbody (2) being at least part of the upper half-shell housing of the exhaust system together with connecting pipes, and the lower half-shell housing being fastened together with lower connecting-pipe parts to the lower side of the underbody (2).

3. Motor-vehicle floor assembly according to Claim 1 or 2, **characterized in that** the lower contour of at least part of the exhaust system (3) is an essentially planar closing plate (5).

4. Motor-vehicle floor assembly according to one of Claims 1 to 3, **characterized in that** the underbody (2) is a compression-moulded part having the upper contour (4) of at least part of the exhaust system (3).

5. Motor-vehicle floor assembly according to one of Claims 1 to 4, **characterized in that** at least two variants of an upper contour (4) of an exhaust system (3) are formed in the underbody (2) of the motor vehicle (1).

6. Motor-vehicle floor assembly according to Claim 5, **characterized in that** two preferably identical, laterally reversed variants of an upper contour (4) of an exhaust system (3) are formed in the underbody (2) of the motor vehicle (1).

7. Motor-vehicle floor assembly according to Claim 5 or 6, **characterized in that** only one variant of the exhaust system (3) is installed in a motor vehicle (1) and the upper contour (4) of the other variant(s) (not installed) of the exhaust system forms the upper side of an installation space for other motor-vehicle parts or systems, such as, for example, a cable tree, the vehicle electronics, vehicle tank, vehicle interior heating, integrated vehicle floor heating.

8. Motor-vehicle floor assembly according to one of Claims 1 to 7, **characterized in that** the exhaust system (3) is a silencer/catalytic-converter exhaust system.

9. Motor-vehicle floor assembly according to one of Claims 1 to 8, **characterized in that** inner parts of the exhaust system (3), such as inner pipes (6), inner chambers (7), basalt wool (8), catalytic-converter monolith are at least partially packed in a foil (9) or in a cardboard box, in particular are welded therein, and the packed or welded package is at least partially accommodated in the indentation of the underbody (2).

10. Motor-vehicle floor assembly according to one of Claims 1 to 9, **characterized in that** inner parts of the exhaust system (3), such as inner pipes (6), inner chambers (7), basalt wool (8) and catalytic-converter monolith are premanufactured and assembled as a constructional unit.

11. Motor-vehicle floor assembly according to Claim 9 or 10, **characterized in that** the free outer space of the packed or welded package in the indentation of the underbody (2) is filled in a densely packed manner with filling material, in particular with basalt wool.

12. Motor-vehicle floor assembly according to one of Claims 1 to 11, **characterized in that** the underbody (2) is a compression-moulded underbody panel and the lower closure plate (5) or the lower half-shell housing part or pipe part is a compression-moulded sheet-metal part which is laser-welded, riveted or Tox clinched onto the underbody panel.

## Revendications

1. Bas de caisse d'un véhicule automobile (1) avec bas de caisse (2) et installation de gaz d'échappement (3), où le bas de caisse (2) présente au moins un renfoncement, dont la limite de la surface correspond au contour supérieur (4) d'au moins une partie de l'installation de gaz d'échappement (3),
**caractérisé en ce que**
le bas de caisse (2) forme au moins partiellement une partie de l'installation de gaz d'échappement (3).

2. Bas de caisse d'un véhicule automobile selon la revendication 1,
**caractérisé en ce que**
l'installation de gaz d'échappement (3) est réalisée suivant une technique de demi-coques, la limite de la surface du renfoncement du bas de caisse (2) formant au moins une partie du boîtier en demi-coque supérieur de l'installation de gaz d'échappement en plus des tubes de raccordement et le boîtier en demi-coque inférieur en plus des pièces des tubes de raccordement inférieures est fixé au côté inférieur du bas de caisse (2).

3. Bas de caisse d'un véhicule automobile selon la revendication 1 ou 2,
**caractérisé en ce que**
le contour inférieur d'au moins une partie de l'installation de gaz d'échappement (3) est une plaque de fermeture (5) essentiellement plane.

4. Bas de caisse d'un véhicule automobile selon l'une quelconque des revendications 1 à 3,
**caractérisé en ce que**
le bas de caisse (2) est une pièce moulée sous pression avec le contour supérieur (4) d'au moins une partie de l'installation de gaz d'échappement (3).

5. Bas de caisse d'un véhicule automobile selon l'une quelconque des revendications 1 à 4,
**caractérisé en ce**
**qu'**au moins deux variantes d'un contour supérieur (4) d'une installation de gaz d'échappement (3) sont réalisées dans le bas de caisse (2) du véhicule automobile (1).

6. Bas de caisse d'un véhicule automobile selon la revendication 5,
**caractérisé en ce que**
deux variantes de préférence égales, à symétrie spéculaire, d'un contour supérieur (4) d'une installation de gaz d'échappement (3) sont réalisées dans le bas de caisse (2) du véhicule automobile (1).

7. Bas de caisse d'un véhicule automobile selon la revendication 5 ou 6,
**caractérisé en ce que**
seulement une variante de l'installation de gaz d'échappement (3) est incorporée dans un véhicule automobile (1) et le contour supérieur (4) de l'autre variante ou des autres variantes non incorporées_de l'installation de gaz d'échappement forme le côté supérieur d'un espace d'installation pour d'autres pièces ou systèmes du véhicule automobile, comme par exemple des faisceaux de câble, une électronique du véhicule, un réservoir du véhicule, un chauffage de l'habitacle du véhicule, un chauffage au sol intégré du véhicule.

8. Bas de caisse d'un véhicule automobile selon l'une quelconque des revendications 1 à 7,
**caractérisé en ce que**
l'installation de gaz d'échappement (3) est une installation de gaz d'échappement à silencieux/catalyseur.

9. Bas de caisse d'un véhicule automobile selon l'une quelconque des revendications 1 à 8,
**caractérisé en ce que**
les parties internes de l'installation de gaz d'échappement (3), telles que les tubes internes (6), les chambres internes (7), la laine de basalte (8), le monolithe du catalyseur, sont emballées au moins partiellement dans une feuille (9) ou dans un carton, notamment sont soudées, et le paquet emballé ou soudé est reçu au moins partiellement dans le renfoncement du bas de caisse (2).

10. Bas de caisse d'un véhicule automobile selon l'une quelconque des revendications 1 à 9,
**caractérisé en ce que**
les parties internes de l'installation de gaz d'échappement (3), telles que les tubes internes (6), les chambres internes (7), la laine de basalte (8), le monolithe du catalyseur, sont préfabriquées et sont assemblées sous forme d'une unité constructive.

11. Bas de caisse d'un véhicule automobile selon la revendication 9 ou 10,
**caractérisé en ce que**
l'espace externe libre du paquet emballé ou soudé dans le renfoncement du bas de caisse (2) est rempli avec une garniture dense de matériau de remplissage, notamment de laine de basalte.

12. Bas de caisse d'un véhicule automobile selon l'une quelconque des revendications 1 à 11,
**caractérisé en ce que**
le bas de caisse (2) est une tôle de bas de caisse moulée par compression et la plaque de fermeture inférieure (5) ou la partie du boîtier ou partie tubulaire en demi-coque inférieure est une pièce en tôle moulée par compression, qui est soudée au laser, rivetée ou assemblée par clinchage Tox à la tôle du bas de caisse.
